# EUROPEAN PATENT APPLICATION

(11) **EP 4 753 206 A1**
(43) Date of publication of application: **03.06.2026**
(21) Application number: 24845293.0
(22) Date of filing: 25.06.2024
(51) Int. Cl.: H04L 9/10, H04L 9/32

(54) **KEY MANAGEMENT DEVICE, KEY MANAGEMENT SYSTEM, KEY MANAGEMENT METHOD, KEY MANAGEMENT PROGRAM, AND COMPUTER-READABLE STORAGE MEDIUM**

(30) Priority: 26.07.2023 JP 2023121905
(71) Applicant: KABUSHIKI KAISHA TOSHIBA, Minato-ku Tokyo 105-0023 (JP)
(72) Inventor: MISAWA, Yuto, Kawasaki-shi, Kanagawa 212-0013 (JP)
(74) Representative: HKW Intellectual Property PartG mbB
(86) International application number: PCT/JP2024/023017
(87) International publication number: WO 2025/022911

(57) **Abstract**

According to an embodiment, a key management device includes a first acquisition unit, a storage unit, a first authentication unit, a generation unit, a second acquisition unit, and a second authentication unit. The first acquisition unit acquires pre-authentication information including a user ID, authentication information and encrypted authentication information. The storage unit stores a DB key securely. The first authentication unit decrypts the encrypted authentication information using the DB key and performs authentication using the decrypted authentication information and the authentication information. The generation unit generates a ticket associated with the user ID based on a result of the authentication and generates a pre-authentication response including the ticket. The second acquisition unit which acquires session information including the ticket. The second authentication unit which authenticates the session information based on the ticket included in the session information and generates a cryptographic key corresponding to the ticket.

## Description

### FIELD

Embodiments of the present invention relate to a key management device, a key management system, a key management method, a key management program, and a computer-readable storage medium.

### BACKGROUND

In recent years, there have been an increasing number of occasions in which cryptographic keys stored in a hardware security module (HSM) are used for data secrecy, electronic signatures, and device authentication of information processing apparatuses. The HSM is a device having cryptographic processing and key management functions and having obtained certification of the international standard, such as Federal Information Processing Standard (FIPS), Common Criteria (CC) and Peripheral Component Interconnect (PCI).

For example, Patent Literature 1 discloses a technique for erasing a cryptographic key stored in an HSM after a lapse of a predetermined time to enhance security of data to be encrypted for use.

### CITATION LIST

### PATENT LITERATURE

Patent literature 1: Japanese Patent No. 4946562

### SUMMARY

### TECHNICAL PROBLEM

The HSM based on public-key cryptography standards (PKCS) #11 is authenticated as not a specific person but a role. Therefore, the HSM has the problem that a user (individual) cannot be specified.

This invention has been developed in consideration of the above situation and its object is to provide a technique capable of authenticating a specified user in the HSM based on the PKCS #11.

### SOLUTION TO PROBLEM

According to an embodiment, a key management device includes a first acquisition unit, a storage unit, a first authentication unit, a generation unit, a first output unit, a second acquisition unit, a second authentication unit, and a second output unit. The first acquisition unit acquires pre-authentication information including a user ID, authentication information and encrypted authentication information. The storage unit stores a DB key securely. The first authentication unit decrypts the encrypted authentication information using the DB key and performs authentication using the decrypted authentication information and the authentication information. The generation unit generates a ticket associated with the user ID based on a result of the authentication and generates a pre-authentication response including the ticket. The first output unit which outputs the pre-authentication response. The second acquisition unit which acquires session information including the ticket. The second authentication unit which authenticates the session information based on the ticket included in the session information and generates a cryptographic key corresponding to the ticket. The second output unit which outputs an authentication result obtained by the second authentication unit.

### BRIEF DESCRIPTION OF THE DRAWINGS

FIG. 1 is a diagram conceptually showing a configuration example of a key management system according to an embodiment.
FIG. 2 is a block diagram showing a configuration example of a host device and an HSM in the key management system according to the embodiment.
FIG. 3 is a block diagram showing a configuration example of an application server in the key management system according to the embodiment.
FIG. 4 is a diagram showing an example of a software configuration of the host device, HSM and application server.
FIG. 5 is a sequence diagram showing an example of a user authentication registration process according to the embodiment.
FIG. 6 is a conceptual diagram showing an example of the registration process described with reference to FIG. 5.
FIG. 7 is a sequence diagram showing an example of an authentication process according to the embodiment.
FIG. 8 is a conceptual diagram showing an example of the registration process described with reference to FIG. 7.
FIG. 9 is a conceptual diagram showing an example of the registration process described with reference to FIG. 7.

### DETAILED DESCRIPTION

A key management device, a key management system, a key management method, a key management program and a computer-readable storage medium will be described below in detail with reference to the drawings. It should be noted that in the following embodiment, the portions with the same numeral perform the same operation and their duplicate descriptions will be omitted. For example, when there are a plurality of same or similar elements, a common symbol may be used to describe the elements without distinction, or a branch number may be used in addition to the common symbol to distinguish the elements from each other.

### [Configuration]

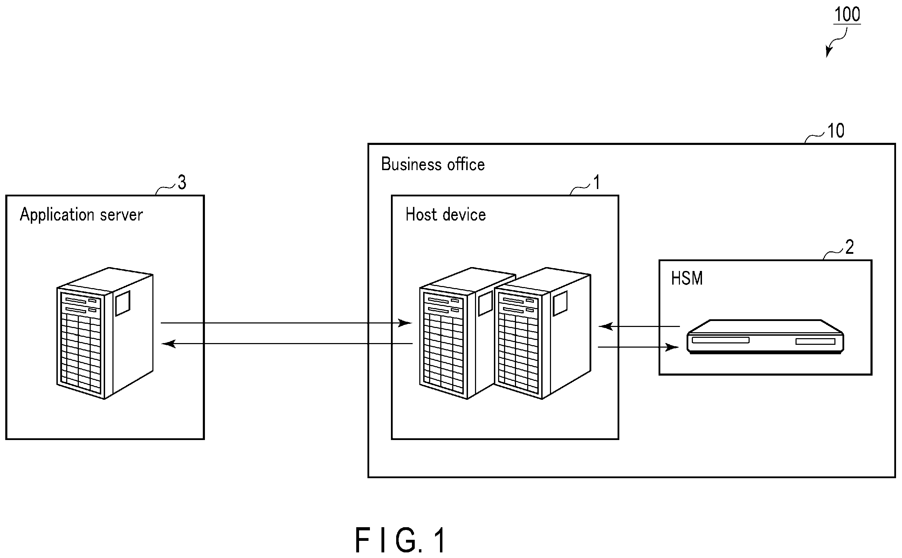

FIG. 1 is a diagram conceptually showing a configuration example of a key management system 100 according to an embodiment. As shown in FIG. 1, the key management system 100 includes a host device 1, an HSM 2 and an application server 3.

The host device 1 and HSM 2 are located in a business office 10, for example. The host device 1 is connected to the HSM 2 and application server 3. The host device 1 transmits a request such as a signature generating request from the application server 3 to the HSM 2, and transmits a digital signature or the like to the application server 3.

The HSM 2 as a key management device is a tamper-resistant hardware device that securely generating, protecting and managing key information. For example, the HSM 2 is connected to the host device 1 via a PCIe or a LAN. If the HSM 2 is connected via a LAN, it may be located in the same rack as a rack in which the host device 1 is located. The HSM 2 generates key information including a cryptographic key and securely stores the generated cryptographic key. In addition, the HSM 2 performs arithmetic processing including an encryption process using the stored key information. For example, the HSM 2 performs arithmetic processing such as data encryption and decryption using the stored key information, electronic signature and electronic certificate creation.

The host device 1 cooperates with the HSM 2 to provide the application server 3 with a cryptographic key to be generated by the HSM 2 in response to a request from the application server 3. For example, the host device 1 provides the application server 3 with key information generated by the HSM 2 in response to a request from the application server 3 as a key generating function. For example, the host device 1 may instruct the HSM 2 to generate key information including a key pair of a public key and a private key in response to a request from the application server 3.

In addition, the host device 1 may have a function of storing log data indicating the contents of processing. For example, when the host device 1 performs an encryption process such as an electronic signature using a private key stored in the HSM 2, it may generate log data indicating the contents of the encryption process, and store in a storage device data obtained by electronically signing the generated log data by the HSM 2 (signed log data). Note that the function of storing log data indicating the contents of processing may be a form that the HSM 2 has. It may be located in the business office 10.

The application server 3 transmits a request for processing such as an electronic signature to the host device 1. Then, the application server 3 acquires from the host device 1 data that is subjected to arithmetic processing (electronic signature or encryption) by the HSM 2. Note that although FIG. 1 shows an example of one application server 3, a plurality of application servers 3 may of course be connected to the host device 1.

In addition, the application server 3 may be integrated with the host device 1 or may be set in the business office 10.

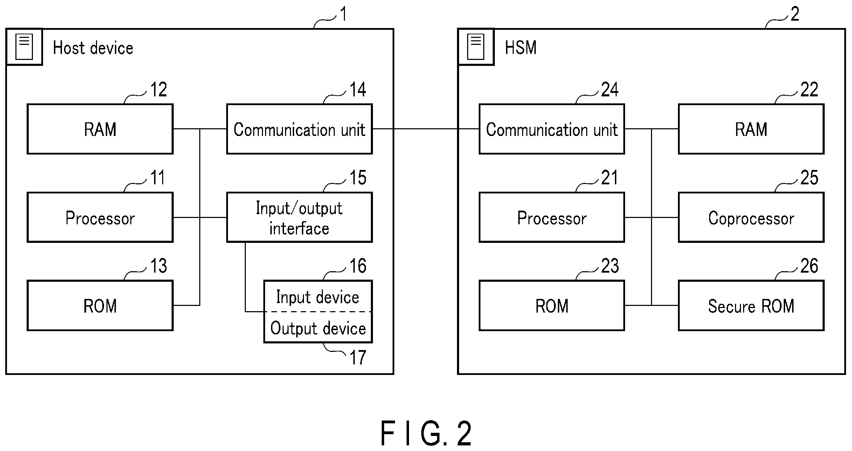

FIG. 2 is a block diagram showing a configuration example of the host device 1 and HSM 2 in the key management system 100 according to the embodiment.

As shown in FIG. 2, the host device 1 includes a processor 11, a RAM 12, a ROM 13, a communication unit 14, an input/output interface 15, an input device 16, an output device 17 and the like. The processor 11 may be a central processing unit (CPU), a micro processing unit (MPU), a digital signal processor (DSP) or the like. The processor 11 is connected to each unit in the host device 1 via a system bus to transmit and receive data to and from each unit. The processor 11 cooperates with the RAM 12 and ROM 13 to perform operations such as control and data processing in the host device 1.

The RAM (read access memory) 12 is a volatile memory that temporarily stores data. The RAM 12 functions as a working memory when the processor 11 executes a program.

The ROM (read only memory) 13 is a nonvolatile memory that stores control data and programs for implementing the basic operation of the host device 1.

The communication unit 14 is an interface that communicates with the HSM 2 and the application server 3. If, in communication with the HSM 2, the host device 1 is connected to the HSM 2 by the PCIe, it communicates with the HSM 2 via a bus, not via the communication unit 14. On the other hand, if the host device 1 is connected to the HSM 2 by a LAN, it communicates with the HSM via the communication unit 14. In the communication with the application server 3, the communication unit 14 may perform communications by wire or radio. For example, the communication unit 14 is connected to the application server 3 via a wide area network such as the Internet. Alternatively, the communication unit 14 is directly connected to the application server 3 via a LAN or the like.

The input/output interface 15 is connected to the input device 16, output device 17 and the like. The input/output interface 15 is an interface that allows information to be transferred between the input device 16 and the output device 17. The input/output interface 15 may be integrated with the communication unit 14. For example, the host device 1 and at least one of the input device 16 and output device 17 are wirelessly connected using a short-range wireless technology or the like, and information may be transferred using the short-range wireless technology.

The input device 16 may include, for example, a keyboard and a pointing device for an administrator who manages the host device 1 to input various items of information to the host device 1. The input device 16 may also include a reader for reading data to be stored in the ROM 13 from a memory medium, such as a USB memory, and a disk device for reading such data from a disk medium.

The output device 17 includes a display or the like which displays applications and the like to be executed by the processor 11 as a calculation result of the processor 11. The output device 17 also includes a printer or the like which prints the information displayed on the display.

Further, as shown in FIG. 2, the HSM 2 includes a processor 21, a RAM 22, a ROM 23, a communication unit 24, a coprocessor 25, a secure ROM 26 and the like.

The processor 21 may be a CPU, an MPU, a DSP or the like. The processor 21 is connected to each unit in the HSM 2 via a system bus to transmit and receive data to and from each unit. The processor 21 cooperates with the RAM 22 and ROM 23 to perform operations such as control and data processing in the HSM 2.

The RAM 22 is a volatile memory that temporarily stores data. The RAM 22 functions as a working memory when the processor 21 executes a program.

The ROM 23 is a nonvolatile memory that stores control data and programs for implementing the basic operation of the HSM 2.

The communication unit 24 is an interface for communicating with the host device 1. On the other hand, when the HSM is connected to the host device 1 by a LAN, it is connected to the host device 1 via the communication unit 24.

The coprocessor 25 is a CPU, an MPU, a DSP or the like. The coprocessor 25 performs cryptographic arithmetic processing such as cryptographic processing and secure messaging generation processing. For example, the coprocessor 25 performs encryption and decryption processing of a public key cipher, encryption and decryption processing of a common key cipher, arithmetic operation using a hash function, and the like.

The secure ROM 26 is a ROM having tamper resistance. The secure ROM is a nonvolatile memory that stores a cryptographic key and the like to be used when the coprocessor 25 performs a process. The tamper resistance may be possessed by the entire HSM 2 or by only the secure ROM.

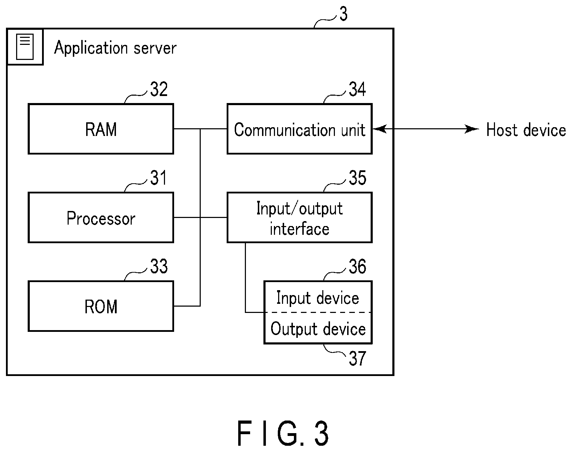

FIG. 3 is a block diagram showing a configuration example of the application server 3 in the key management system 100 according to the embodiment.

As shown in FIG. 3, the application server 3 includes a processor 31, a RAM 32, a ROM 33, a communication unit 34, an input/output interface 35, an input device 36, an output device 37 and the like.

The processor 31 may be a CPU, an MPU, a DSP or the like. The processor 31 is connected to each unit in the application server 3 via a system bus to transmit and receive data to and from each unit. The processor 31 cooperates with the RAM 32 and ROM 33 to perform operations such as control and data processing in the application server 3.

The RAM 32 is a volatile memory that temporarily stores data. The RAM 32 functions as a working memory when the processor 31 executes a program.

The ROM 33 is a nonvolatile memory that stores programs and control data for implementing the basic operation of the application server 3.

The communication unit 34 is an interface for communicating with the host device 1. The communication unit 34 may perform communications by wire or radio. For example, the communication unit 34 is connected to the host device 1 via a wide area network such as the Internet. Alternatively, the communication unit 34 is directly connected to the host device 1 via a LAN or the like.

The input/output interface 35 is connected to the input device 36, the output device 37 and the like. The input/output interface 35 is an interface that allows information to be transferred between the input device 36 and the output device 37. The input/output interface 35 may be integrated with the communication unit 34. For example, the application server 3 and at least one of the input device 36 and output device 37 are wirelessly connected using a short-range wireless technology or the like, and information may be transferred using the short-range wireless technology.

The input device 36 may include, for example, a keyboard and a pointing device for a user who manages the application server 3 to input various items of information to the host device 1. The input device 36 may also include a reader for reading data to be stored in the ROM 33 from a memory medium such as a USB memory, and a disk device for reading such data from a disk medium.

The output device 37 includes a display or the like which displays an application and the like to be executed by the processor 31 as a calculation result of the processor 31. The output device 37 also includes a printer or the like which prints the information displayed on the display.

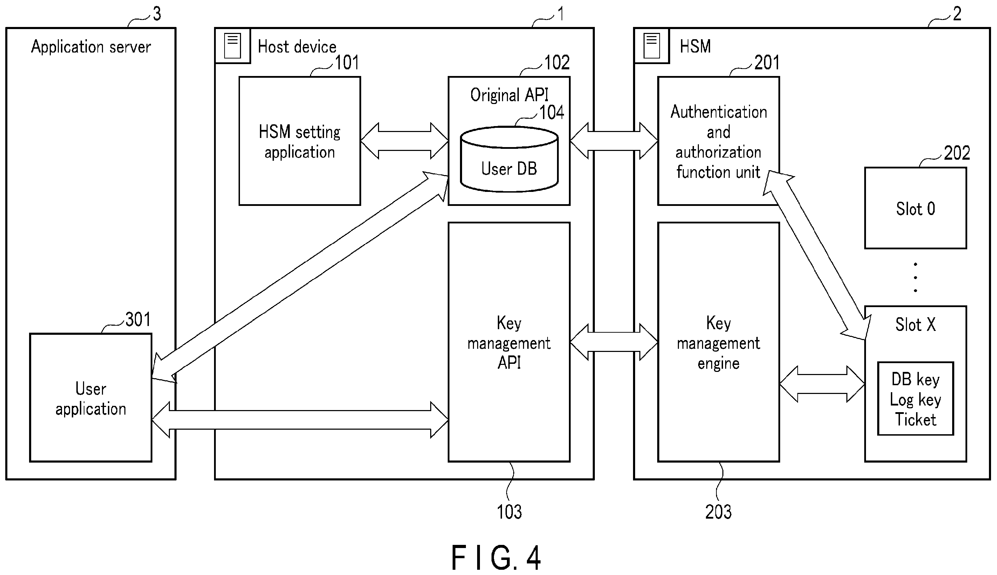

FIG. 4 is a diagram showing an example of a software configuration of the host device 1, HSM 2 and application server 3.

The host device 1 includes an HSM setting application 101, an original API 102, a key management API 103 and a user database 104 (indicated as User DB in FIG. 4). The HSM 2 includes an authentication and authorization function unit 201, a slot 202 and a key management engine 203. The application server 3 includes a user application 301.

The HSM setting application 101 is an application for the administrator of a host PC to register a user who uses the application server 3. The HSM setting application 101 is, for example, an application provided by an HSM manufacturer. The HSM setting application 101 is operable under the control of the processor 11.

The original API 102 is an API provided by an HSM manufacturer and is connectable to the authentication and authorization function unit 201 of the HSM 2, which will be described later. The original API 102 is operable under the control of the processor 11.

The key management API 103 is an API that conforms to PKCS#11 and can be connected to, for example, the key management engine 203 of the HSM 2. The key management API 103 is operable under the control of the processor 11.

The user database 104 is a database that stores encrypted authentication information, user IDs and of users who use the user application 301, and the like. The encrypted authentication information will be described later. For example, the user database 104 is a storage unit using part of the ROM 13.

The authentication and authorization function unit 201 is controlled by the processor 21 to perform an authentication operation using a DB key or the like which is stored in a slot 202 to be described later. For example, the authentication and authorization function unit 201 is operable under the control of the coprocessor 25.

The slot 202 includes, for example, slots 0, ... and X, and each of the slots includes a corresponding token, though not shown in FIG. 4 or the like. Usually, a slot and its corresponding token are allocated to each application server 3 (i.e., each customer). Therefore, in the conventional method, it is not known which of the users who use the user application 301 has used it. Note that although the application server 3 in the present embodiment uses the slot X, it is needless to say that the application server 3 is allocated to an optional slot. In addition, the slot 202 stores, for example, a DB (database) key, a log key, and a random number generation method for generating a ticket in advance. These information items are stored in the secure ROM 26, for example.

The key management engine 203 is an API for performing PKCS#11-compliant cryptographic communication with the host device 1. The key management engine 203 is operable under the control of a program 21. Since the key management engine 203 has only to be any API corresponding to the standard, its detailed description is omitted here.

The user application 301 is an application that is used by each user of the application server 3 and operates under the control of the processor 31. Note that in the communication from the user application 301 to the original API 102 or the key management-compatible API 103, the user application 301 may directly call the function of the original API 102 or key management-compatible API 103, or the host device 1 may have an application that relays the communication from the user application 301.

### [Operation]

### [Registration Operation]

First, a user authentication registration process in the HSM 2 according to the embodiment will be described.

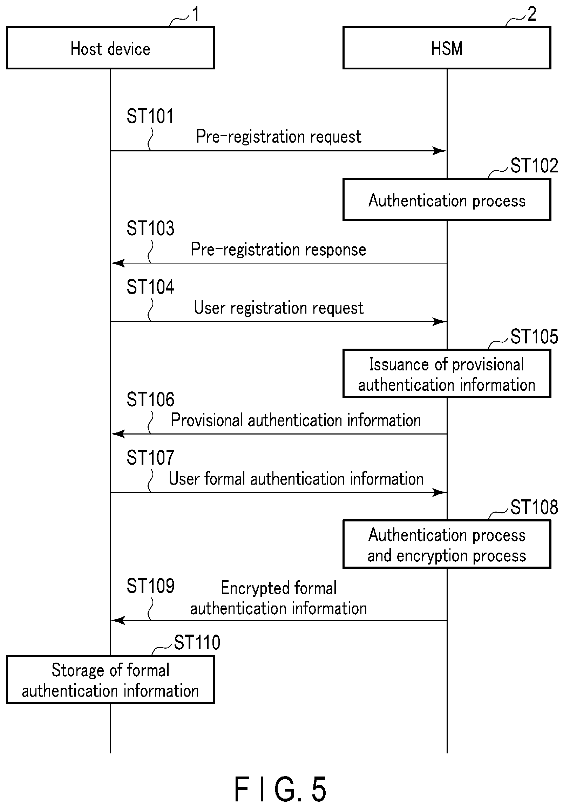

FIG. 5 is a sequence diagram showing an example of the user authentication registration process according to the embodiment. The respective operations of the sequence are implemented by the processor 11 of the host device 1 and the processor 21 and coprocessor 25 of the HSM 2 reading and executing programs stored in the internal memory, RAM 12 or ROM 13 of the processor 11 and the internal memory, RAM 22, ROM or secure ROM 26 of the processor 21.

It is assumed here that in the process described below, the administrator of the host device 1 has been registered in the host device 1 using a general method. It is thus assumed that encrypted administrator authentication information associated with the administrator user ID is stored in the user database. It is also assumed that the application server 3 uses the slot X. Therefore, the user of the application server 3 registers the slot X of the HSM 2.

In step ST 101, the processor 11 of the host device 1 transmits a pre-registration request to the HSM 2. First, in response to an input from the administrator requesting user registration, the processor 11 lunches an application provided by an HSM manufacturer and controls the output device 17 to display the application. Then, the processor 11 operates as an acquisition unit to acquire the administrator user ID and the administrator authentication information from the input device 16. The processor 11 also operates as an acquisition unit to acquire encrypted administrator authentication information associated with the administrator user ID stored in the user database. Then, the processor 11 operates as a transmission unit to transmit the acquired administrator user ID, administrator authentication information, and the encrypted administrator authentication information to the HSM 2 via the original API 102.

In step ST102, the processor 21 and coprocessor 25 of the HSM 2 perform an authentication process. The processor 21 operates as an output unit to output encrypted administrator authentication information to the coprocessor 25 together with an instruction to perform the authentication process using the slot X based on the administrator user ID included in the pre-registration request. The coprocessor 25 as a decryption unit decrypts the encrypted administrator authentication information using the DB key. Then, the processor 21 operates as an authentication unit to perform an authentication process based on the decrypted administrator authentication information and the administrator authentication information. If the decrypted administrator authentication information and the administrator authentication information match, the user is authenticated, and if they do not match, the user is not authenticated. The coprocessor 25 which has confirmed the authentication issues a ticket using a random number and sets the expiration date of the ticket. Then, the coprocessor 25 operates as an output unit to output the ticket and the expiration date of the ticket to the processor 21.

In step ST103, the processor 21 transmits to the host device 1 a pre-registration response including the ticket and the expiration date thereof via the authentication and authorization function unit 201.

In step ST104, the processor 11 transmits a user registration request to the HSM 2. The processor 11 receives the pre-registration response and informs the administrator of the acquisition of the ticket and the expiration date of the ticket using the HSM setting application 101. The administrator inputs the user ID of a user (e.g., a user of the application server 3) who is to be registered. The user ID has only to be any information capable of specifying the user uniquely, such as a mail address and a user registration number registered in the application server 3. The processor 11 transmits a user registration request including a user ID, a ticket and an administrator user ID via the original API.

In step ST105, the processor 21 and coprocessor 25 issue provisional authentication information. The processor 21 outputs the user ID to the coprocessor 25 together with an instruction to perform an authentication process using the slot X based on the administrator user ID included in the pre-registration request. The coprocessor 25 operates as a generation unit to generate provisional authentication information using random numbers and associates it with the user ID. In addition, the coprocessor 25 encrypts the provisional authentication information using the DB key. Then, the coprocessor 25 outputs the provisional authentication information and the encrypted provisional authentication information to the processor 21.

In step ST106, the processor 21 transmits the provisional authentication information and the encrypted provisional authentication information to the host device 1 via the authentication and authorization function unit 201. The processor 11 causes the user data base to store the encrypted provisional authentication information in association with the user ID.

In step ST107, the processor 11 operates as a transmission unit to transmit user formal authentication information to the HSM 2. The processor 11 indicates the provisional authentication information to the administrator using the HSM setting application 101. Then, the administrator inputs to the host device 1 the user ID, provisional authentication information and formal authentication information. The formal authentication information is a password used by a user and may be information set by the user. Thus, the host device 1 may acquire the formal authentication information in advance from the user of the application server 3. The processor 11 acquires the encrypted provisional authentication information associated with the user ID from the user database. Then, the processor 11 transmits the user ID, provisional authentication information, encrypted provisional authentication information and formal authentication information to the HSM 2 via the original API.

In step ST108, the processor 21 and coprocessor 25 perform an authentication process and an encryption process. The processor 21 outputs the encrypted provisional authentication information, provisional authentication information and formal authentication information included in the user formal authentication information to the coprocessor 25 together with an instruction to perform the authentication process using the slot X based on the user ID. The coprocessor 25 operates as an authentication unit to decrypt the encrypted provisional authentication information and determine whether the decrypted provisional authentication information matches the provisional authentication information. If they match, the user is authenticated, and if they do not match, the user is not authenticated. When a user is authenticated, the coprocessor 25 encrypts the formal authentication information using the DB key. Then, it outputs the encrypted authentication information to the processor 21.

In step ST109, the processor 21 transmits the encrypted authentication information to the host device 1 via the authentication and authorization function unit 201.

In step ST110, the processor 11 causes the user database to store the encrypted formal authentication information in association with the user ID.

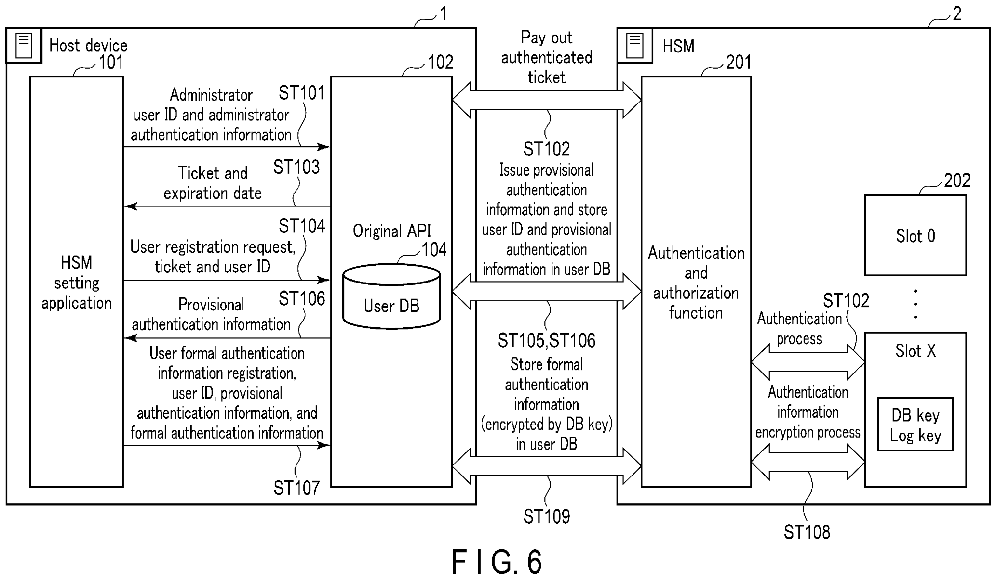

FIG. 6 is conceptual diagram showing an example of the registration process described with reference to FIG. 5.

The step ST shown in FIG. 6 corresponds to the step ST shown in FIG. 5. As shown in FIG. 6, first, the HSM 2 is caused to authenticate an administrator using the administrator user ID and the administrator authentication information from the HSM setting application 101. After that, the HSM 2 is caused to output a user registration request including a ticket and a user ID to be registered, and issue provisional authentication information. Then, the user ID, provisional authentication information and formal authentication information are outputted to the HSM 2 to register the formal authentication information associated with the user ID.

### (Authentication Process)

Next is a description of an example of an authentication process using the HSM 2.

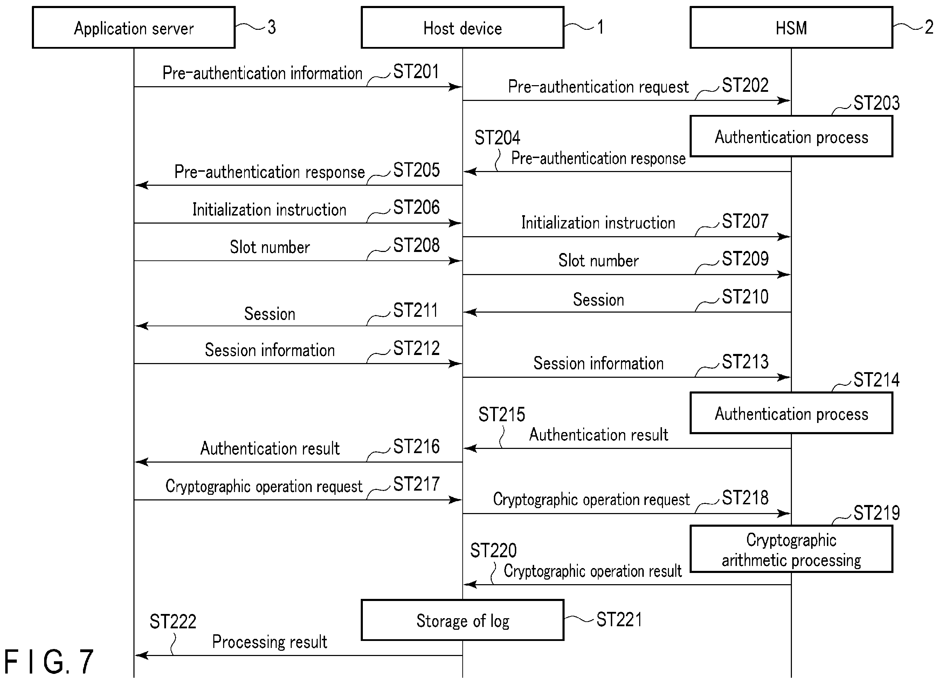

FIG. 7 is a sequence diagram showing an example of the authentication process according to the embodiment.

Each operation of the sequence is implemented by the processor 11 of the host device 1, the processor 21 and coprocessor 25 of the HSM 2 and the processor 31 of the application server 3 reading and executing programs stored in the internal memory of the processor 11, the RAM 12 or the ROM 13; the internal memory of the processor 21, the RAM 22, the ROM 23 or the secure ROM 26; and the internal memory of the processor 31, the RAM 32 or the ROM 33.

It is assumed here that the user of the application server 3 in the following description is a user who is registered by the foregoing registration operation. Hereinafter, the foregoing formal authentication information will simply be referred to as authentication information.

In step ST201, the processor 31 transmits pre-authentication information to the host device 1. The processor 31 operates as a transmission unit to request a user ID and authentication information from a user using the user application 301 or the like. The processor 31 acquires the user ID and authentication information that are input by the user to the user application 301. The processor 31 transmits pre-authentication information including the acquired user ID and authentication information.

In step ST202, the processor 11 operates as a transmission unit to transmit the pre-authentication request to the HSM 2. The processor 11 acquires from the user database 104 the encrypted authentication information corresponding to the user ID. Then, the processor 11 transmits a pre-authentication request including the user ID, authentication information and encrypted authentication information to the HSM 2 via the original API 102.

In step ST203, the processor 21 and coprocessor 25 perform an authentication process. The processor 21 outputs to the coprocessor 25 the authentication information and encrypted authentication information together with an instruction to perform the authentication process using the slot X based on the user ID included in the pre-authentication request. The coprocessor 25 operates as an authentication unit to decrypt the encrypted authentication information. Then, it determines whether the decrypted authentication information matches the authentication information. If they match, the user is authenticated, and if they do not match, the user is not authenticated. When the user is authenticated, the coprocessor 25 operates as a generation unit to issue a ticket using a random number and set the expiration date of the ticket. The expiration date may be set at any time.

In step ST204, the processor 21 transmits an authentication response to the host device 1. The coprocessor 25 outputs the ticket and the expiration date of the ticket to the processor 21. The processor 21 transmits a pre-authentication response including the ticket and the expiration date of the ticket to the host device 1 via the authentication and authorization function unit 201.

In step ST205, the processor 11 transmits the pre-authentication response to the application server 3. Thus, the user of the application server 3 is authenticated. Then, the user performs various processes based on the ticket transmitted from the HSM 2.

In step ST206, the processor 31 transmits an initialization instruction to the host device 1. The processor 31 determines that authentication is required at the time of use of the HSM 2 based on a predetermined process via the user application 301. Then, the processor 31 generates an initialization instruction to initialize a connection to the HSM 2 in the process and transmits the initialization instruction to the host device 1.

In step ST207, the processor 11 transmits the initialization instruction to the HSM 2 via the key management API 103. In addition, the processor 11 which has received the initialization instruction converts it into an initialization instruction usable by the HSM 2, and transmits the converted initialization instruction to the HSM 2 via the key management API 103. In response to the initialization instruction, the processor 21 or coprocessor 25 of the HSM 2 initializes the connection of the application server 3 to the HSM 2 using C_Initialize, for example.

In step ST208, the processor 31 transmits a slot number to the host device 1. Then, the processor 31 transmits a slot number (e.g., slot X in this embodiment), which is used by the user, to the host device 1 via the user application 301.

In step ST209, the processor 11 transmits the slot number to the HSM 2. Upon receiving the slot number, the processor 11 converts the slot number into a slot number usable in the HSM 2, and transmits a session open instruction to the HSM 2 via the key management API 103. Upon receiving the session open instruction, the coprocessor 25 establishes a session between the user application 301 and a token corresponding to the slot number (slot X) using C_OpenSession, for example and acquires a session handle for identifying the established session.

In step ST210, the processor 21 transmits a session, which is the session handle, to the host device 1 via the key management engine 203.

In step ST211, the processor 11 transmits the session to the application server 3 using the communication unit 14.

In step ST212, the processor 31 transmits session information to the host device 1. Upon receiving the session, the processor 31 generates session information including a session handle, a role and a ticket, and transmits the generated session information to the host device 1.

In general, the session information includes a session handle, a role and a PIN, but in the present embodiment, a ticket included in the pre-authentication response is generated to be included in the session information.

In step ST213, the processor 11 transmits the session information to the HSM 2. Upon receiving the session information, the processor 11 converts the session information into session information usable in the HSM 2, and transmits the session information to the HSM 2 via the key management API 103.

In step ST214, the processor 21 and coprocessor 25 perform an authentication process. The coprocessor 25 operates as an authentication unit to authenticate the session information using C_Login, for example. For example, the coprocessor 25 performs authentication of a role included in the session information. As the authentication result, the coprocessor 25 generates, for example, a cryptographic key corresponding to the ticket. The cryptographic key is stored in the secure ROM 26, for example. At this time, the user ID corresponding to the ticket included in the session information can be identified. The coprocessor 25 operates as an output unit to output the authentication result to the processor 21.

In step ST215, the processor 21 transmits the authentication result to the host device 1 via the key management engine 203.

In step ST216, the processor 11 transmits the authentication result to the application server 3 using the communication unit 14.

In step ST217, the processor 31 transmits a cryptographic operation request to the host device 1. If the processor 31 requires a cryptographic operation such as C_Encrypt, it transmits the cryptographic operation request, which is a request to perform the cryptographic operation, to the host device 1.

In step ST218, the processor 11 transmits the cryptographic operation request to the HSM2 through the PKCS#11-compatible API 1023.

In step ST219, the processor 21 and coprocessor 25 perform a cryptographic operation. The coprocessor 25 performs the cryptographic operation based on the cryptographic operation request using a cryptographic key corresponding to the ticket generated in step ST214. Then, the coprocessor 25 generates a cryptographic operation result including a processing result of the cryptographic operation, a log of the cryptographic operation, a ticket and a message authentication code (MAC). The processor 21 may cause the ROM 23 to store the operation result. The message authentication code is generated for the generated log and the acquired ticket. The host device 1, HSM 2 and user application server 3 can detect the falsification of the log or ticket based on the message authentication code as required; thus, user's nonrepudiation can be secured.

In step ST220, the processor 21 transmits the operation result to the host device 1.

In step ST221, the processor 11 causes it to store the operation result. For example, the processor 11 associates the ticket of the operation result with the user ID to cause the user database to store the operation result (log and MAC).

In step ST222, the processor 11 transmits the result of the cryptographic arithmetic processing to the application server 3.

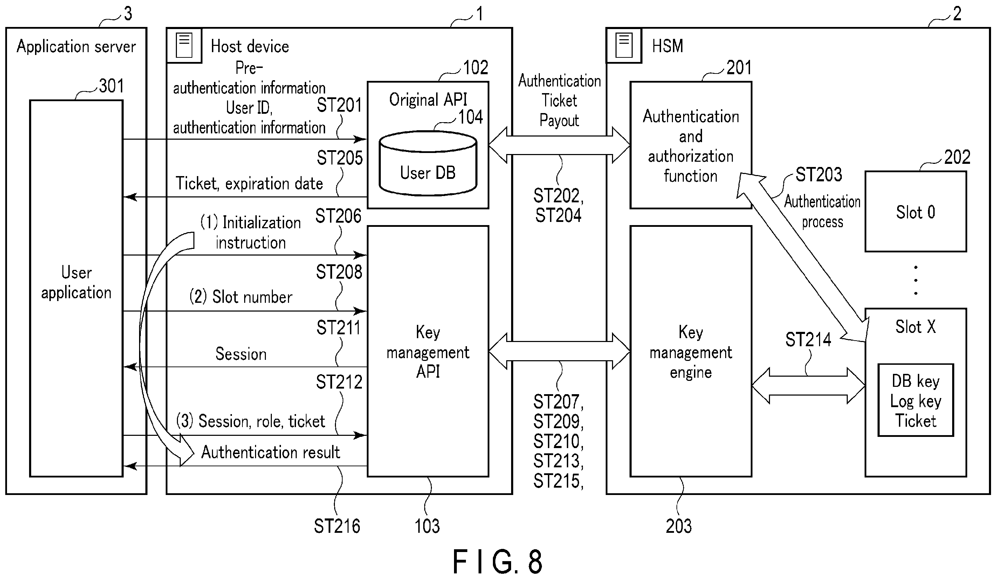

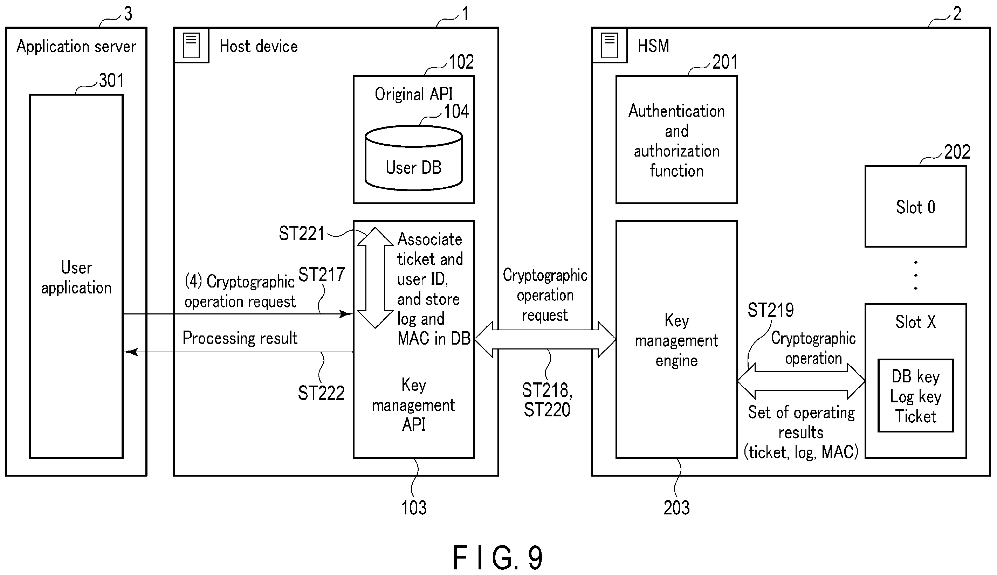

FIGS. 8 and 9 are conceptual diagrams each showing an example of the registration process described with reference to FIG. 7.

The steps ST shown in FIGS. 8 and 9 correspond to the steps ST shown in FIG. 7. As shown in FIG. 8, first, authentication is performed based on the pre-authentication information to pay out a ticket. Then, authentication is performed based on session information including at least the ticket to generate a cryptographic key corresponding to the ticket. The ticket is associated with the user ID and can specify a user that handles the user application 301. It is therefore possible to recognize which user processes the log of cryptographic operation using the cryptographic key corresponding to the ticket.

With the embodiment as described above, user's nonrepudiation and accountability are supported. That is, it is possible to specify, from the log, which of the users who use the user application 301 made it, which of the users used it, which of the users disposed of it, and the like. That is, the above allows the entire life cycle of the cryptographic key, which generated, used and deleted for each slot used for the cryptographic operation.

### (Advantageous Effects of Embodiment)

According to the embodiments described above, a specified user who uses the user application 301 can be authenticated while complying with PKCS#11. In addition, accountability for user's unauthorized use can be provided by taking the log used by the user.

### (Modification)

The above-described embodiment is directed to an example of issuing a ticket using the HSM 2 and transmitting the ticket to the application server 3. However, the host device 1 may issue a ticket and transmit the ticket to the application server 3. That is, the host device 1 may perform authentication and generation functions at the time of a ticket issuing process.

The programs according to the present embodiment may be transferred while being stored in an electronic device (computer) as the host device 1, the HSM 2 or the application server 3, or may be transferred while not being stored in the electronic device. In the latter case, the programs may be transferred via a network or while being stored in a storage medium. The storage medium is a non-transient tangible medium. The storage medium is a computer-readable medium serving as the host device 1, the HSM2 or the application server 3. The storage medium has only to be any medium capable of storing a program and being read by a computer, such as an optical disk (e.g., a CD-ROM), a magnetic disk and a semiconductor memory (e.g., a memory card).

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A key management device comprising:
a first acquisition unit which acquires pre-authentication information including a user ID, authentication information and encrypted authentication information;
a storage unit which stores a DB key securely;
a first authentication unit which decrypts the encrypted authentication information using the DB key and performs authentication using the decrypted authentication information and the authentication information;
a generation unit which generates a ticket associated with the user ID based on a result of the authentication and generates a pre-authentication response including the ticket;
a first output unit which outputs the pre-authentication response;
a second acquisition unit which acquires session information including the ticket;
a second authentication unit which authenticates the session information based on the ticket included in the session information and generates a cryptographic key corresponding to the ticket; and
a second output unit which outputs an authentication result obtained by the second authentication unit.

2. The key management device of claim 1, further comprising:
a third acquisition unit which acquires a cryptographic operation request including the authenticated session information;
a cryptographic operation unit which performs a cryptographic operation using the cryptographic key generated to correspond to the ticket; and
a third output unit which outputs an operation result including the ticket, a log by the cryptographic operation and a message authentication code (MAC).

3. The key management device of claim 1, further comprising:
a third acquisition unit which acquires a cryptographic operation request including the authenticated session information;
a cryptographic operation unit which performs a cryptographic operation using the cryptographic key generated to correspond to the ticket; and
a second storage unit which stores an operation result including the ticket, a log by the cryptographic operation and a message authentication code (MAC).

4. The key management device of claim 1, wherein the storage unit has tamper resistance.

5. The key management device of claim 1, wherein:
the first acquisition unit acquires a pre-registration request including an administrator user ID, administrator authentication information and encrypted administrator authentication information;
the first authentication unit decrypts the encrypted administrator authentication information using the DB key and performs authentication using the decrypted administrator authentication information and the administrator authentication information,
the generation unit generates a second ticket associated with the administrator user ID based on an authentication result of the administrator authentication information, and generates a pre-registration response including the second ticket and an expiration date of the second ticket; and
the first output unit outputs the pre-registration response.

6. The key management device of claim 5, wherein:
the first acquisition unit further acquires a user registration request including the second ticket and the user ID in accordance with output of the pre-registration response;
the generation unit generates provisional authentication information and encrypted provisional authentication information using a random number; and
the first output unit outputs the provisional authentication information and the encrypted provisional authentication information.

7. The key management device of claim 6, wherein:
the first acquisition unit acquires user formal authentication information including the user ID, the provisional authentication information, the encrypted provisional authentication information and the formal authentication information in response to output of the provisional authentication information; and
the first authentication unit decrypts the encrypted provisional authentication information using the DB key, performs authentication using the decrypted provisional authentication information and the provisional authentication information, and encrypts the formal authentication information using the DB key in response to the authentication.

8. The key management device of claim 1, wherein the pre-authentication response includes an expiration date of the ticket.

9. A key management system including a key management device and a host device connected to the key management device, wherein:
the host device includes:
an acquisition unit which acquires pre-authentication information including a user ID and authentication information from an application server;
a storage unit which stores encrypted authentication information obtained by encrypting the authentication information;
a first output unit which outputs a pre-authentication request including the user ID, the authentication information and the encrypted provisional authentication information to the key management device;
a transmission unit which acquires a pre-authentication response including a ticket in response to the pre-authentication request to transmit the pre-authentication response to the application server;
a reception unit which receives session information including the ticket; and
a second output unit which outputs the session information, and
the key management device includes:
a storage unit which stores a DB key securely;
a first authentication unit which decrypts the encrypted authentication information included in the pre-authentication request using the DB key and performs authentication using the decrypted authentication information and the authentication information;
a generation unit which generates a ticket associated with the user ID based on a result of the authentication and generates a pre-authentication response including the ticket;
a first output unit which outputs the pre-authentication response;
a second authentication unit which authenticates the session information based on the ticket included in the session information and generates a cryptographic key corresponding to the ticket; and
a second output unit which outputs an authentication result obtained by the second authentication unit.

10. A key management method executed by a processor of a key management device, the method comprising:
acquiring pre-authentication information including a user ID, authentication information and encrypted authentication information;
storing a DB key securely;
decrypting the encrypted authentication information using the DB key;
performing authentication using the decrypted authentication information and the authentication information;
generating a ticket associated with the user ID based on a result of the authentication;
generating a pre-authentication response including the ticket;
outputting the pre-authentication response;
acquiring session information including the ticket;
authenticating the session information based on the ticket included in the session information and generates a cryptographic key corresponding to the ticket; and
outputting an authentication result of the session information.

11. A key management program including an instruction to be executed by a processor of a key management device, the instruction comprising:
acquiring pre-authentication information including a user ID, authentication information and encrypted authentication information;
storing a DB key securely;
decrypting the encrypted authentication information using the DB key;
performing authentication using the decrypted authentication information and the authentication information;
generating a ticket associated with the user ID based on a result of the authentication;
generating a pre-authentication response including the ticket;
outputting the pre-authentication response;
acquiring session information including the ticket;
authenticating the session information based on the ticket included in the session information;
generating a cryptographic key corresponding to the ticket; and
outputting an authentication result of the session information.

12. A non-transitory computer-readable storage medium which stores a program to be executed by a processor, the program causing the processor to:
acquire pre-authentication information including a user ID, authentication information and encrypted authentication information;
store a DB key securely;
decrypt the encrypted authentication information using the DB key;
perform authentication using the decrypted authentication information and the authentication information;
generate a ticket associated with the user ID based on a result of the authentication;
generate a pre-authentication response including the ticket;
output the pre-authentication response;
acquire session information including the ticket;
authenticate the session information based on the ticket included in the session information;
generating a cryptographic key corresponding to the ticket; and
output an authentication result of the session information.
